# FASCICULE DE BREVET EUROPEEN

(11) **EP 1 516 775 B1**
(45) Date de publication et mention de la délivrance du brevet: **30.04.2008**
(21) Numéro de dépôt: 04364061.4
(22) Date de dépôt: 17.09.2004
(51) Int. Cl.: B60N 2/28

(54) **Siège pour enfant à sangles réglables en hauteur**
Kindersitz mit Höhenverstellbaren Sicherheitsgurte
Child seat with height adjustable safety belts

(30) Priorité: 19.09.2003 FR 0311061
(43) Date de publication de la demande: 23.03.2005
(73) Titulaire: DOREL FRANCE SA, 49309 Cholet (FR)
(72) Inventeur: Rabeony, Haja, 49300 Cholet (FR)
(74) Mandataire: Vidon, Patrice

(56) Documents cités:
- US-A1- 2002 145 318
- US-B1- 6 464 294

## Description

Le domaine de l'invention est celui de la puériculture. Plus précisément, l'invention concerne les sièges pour enfants, en particulier ceux destinés à être installés dans un véhicule.

De tels sièges pour enfants sont généralement destinés à être utilisés pendant une période relativement importante de la vie d'un enfant (par rapport notamment à l'évolution de sa morphologie), et/ou par différents enfants.

Il est donc nécessaire que ces sièges puissent évoluer et/ou être adaptés en fonction de l'enfant transporté.

Une telle adaptabilité est également souhaitable pour tenir compte de la façon dont l'enfant est habillé.

Dans le domaine de l'invention, divers systèmes ont été proposés par l'art antérieur pour permettre le réglage de la largeur de l'assise d'un siège, afin de l'adapter à l'enfant transporté (en fonction de sa morphologie et de son habillement notamment). Par exemple, une molette placée sur la face avant de l'assise peut permettre d'agir sur une crémaillère, ou un pas de vis, pour éloigner ou rapprocher les bords latéraux de l'assise.

Cependant, cela n'est clairement pas suffisant pour que le siège soit parfaitement adapté à la morphologie de l'enfant, au fur et à mesure qu'il grandit. Notamment, il faut que la têtière, destinée à maintenir la tête de l'enfant, soit parfaitement placée. Une technique connue consiste à fixer cette têtière à l'aide de moyens de fixation amovibles (bandes auto agrippantes par exemple). Toutefois, cette technique reste limitée à la hauteur maximale du dossier.

Le même problème se pose pour les sangles du harnais, qui doivent être positionnées au niveau des épaules.

On connaît déjà, dans le domaine des sièges pour enfants destinés à être montés dans des véhicules, une solution décrite dans document de brevet EP- 0 287 259 selon laquelle un chariot portant des fentes pour le passage des sangles est monté mobile en hauteur sur le dossier du siège.

Deux grandes fentes sont définies dans le dossier, pour s'étendre sur toute la plage de déplacement des fentes du chariot, de façon à permettre un passage direct, perpendiculairement au dossier, des sangles, quelle que soit la position du chariot. Un inconvénient de cette technique est que la sangle n'est pas guidée au niveau du dossier, du fait de la grande hauteur des fentes.

Le chariot est monté sur l'arrière du dossier, sur des glissières. Pour obtenir son réglage, des moyens de commande sont prévus en arrière du dossier et agissent sur des moyens de blocage de la position du chariot. Le même réglage peut servir au réglage en hauteur de la tétière.
En pratique, le réglage de la position du chariot d'un tel siège s'avère mal aisé, ceci du fait du positionnement des moyens de commande sur la partie arrière supérieure du dossier. En effet, une fois monté dans le véhicule. cette manipulation s'effectue généralement dans des conditions inconfortables.

En fait, l'incommodité du réglage d'un tel siège apparaît de façon particulièrement évidente lorsqu'un enfant est installé dans le siège.

On comprend effectivement qu'une difficulté apparaît lors de la tentative de réglage de la têtière et de la position des sangles. Cette difficulté est liée à la maniabilité réduite du siège, celui-ci étant alourdi du poids de l'enfant (quel que soit ce poids).

Or, le réglage de la têtière et de la position des sangles s'effectue en fonction de la morphologie de l'enfant. Il est donc souhaitable que celui-ci soit présent dans le siège pour ajuster au mieux le réglage.

La personne qui procède au réglage du siège doit donc choisir entre :
- démontage du siège enfant pour procéder au réglage en dehors du véhicule avec un accès aisé à l'arrière du dossier ;
- un réglage approximatif en l'absence de l'enfant, ce qui occasionne éventuellement une sécurité moindre et/ou une gêne pour l'enfant.

On connaît par ailleurs une autre technique présentée dans le document publié sous le numéro FR - 2 787 977 et déposé au même nom que la présente demande. Ce document décrit un siège pour enfant dont le dossier est réglable : un élément portant la têtière et les guide-sangles est mobile en hauteur.

Selon cette technique, la têtière est réglable en hauteur et en largeur, le déplacement vertical de la têtière (et de guide-sangles associés) commandant simultanément le réglage en largeur de la têtière.

Ces réglages peuvent être obtenus par l'intermédiaire d'une molette placée sur la face avant tel que mentionné précédemment.

On connaît encore une autre technique décrite dans le document US-2002/0145318, selon laquelle la têtière portant lesdites sangles est réglable en hauteur. Le blocage/déblocage du déplacement de la têtière est obtenu par l'intermédiaire d'une poignée présente en partie supérieure de la têtière et accessible à partir de la face avant de celle-ci.

La poignée et la têtière correspondantes présentent une structure complexe, impliquant des coûts de fabrication importants, un montage peu aisé et une fiabilité discutable.

Or, s'il est fondamental de proposer des sièges réunissant le plus possible de fonctionnalités, tant sur le plan du confort que sur le plan de la sécurité, il est tout aussi souhaitable que cela ne se répercute pas de façon importante au niveau du prix de revient du produit et de la fiabilité.

L'invention a donc notamment pour objectif de pallier ces inconvénients de l'art antérieur.

Plus précisément, l'invention a pour objectif de proposer un siège pour enfants comprenant des moyens de réglage en hauteur de la position d'au moins une sangle de façon simple, rapide et efficace.

L'invention a également pour objectif de fournir un tel siège pour enfants dans lequel les moyens de commande sont aisément accessibles, et permettent un réglage même quand un enfant est installé dans le siège.

L'invention a aussi pour objectif de fournir un tel siège pour enfants dans lequel les moyens de commande sont faciles à utiliser et à manipuler.

Un autre objectif de l'invention est de fournir un tel siège pour enfants qui soit simple de conception, facile à réaliser et à mettre en oeuvre.

Ces objectifs, ainsi que d'autres qui apparaîtront par la suite, sont atteints grâce à l'invention qui a pour objet un siège pour enfant, comprenant au moins une sangle de maintien de l'enfant montée sur un chariot mobile par rapport au dossier dudit siège, sur la face dudit dossier tournée vers l'intérieur dudit siège, ledit dossier présentant au moins une glissière de guidage essentiellement pleine, dans laquelle coulisse une portion de guidage dudit chariot, portant au moins une desdites sangles, la ou lesdites glissières présentant une ouverture adaptée au passage d'une desdites sangles en un emplacement prédéterminé, de façon que chacune de la ou desdites sangles correspondantes traverse ledit dossier en une position fixe, quelle que soit la position dudit chariot, ledit chariot présentant, en sa partie supérieure, une poignée pouvant prendre au moins deux positions
- une position verrouillée, dans laquelle ledit chariot s'étend sensiblement parallèlement audit dossier, ledit chariot étant alors solidarisé audit dossier ;
- une position de réglage, dans laquelle ladite poignée entraîne ledit chariot en basculement vers l'intérieur dudit siège, la position dudit chariot pouvant alors être réglée en hauteur par rapport audit dossier,
des moyens de rappel tendant à ramener ladite poignée dans ladite position verrouillée.

Une telle solution apparaît simple de conception et efficace. En effet, la pièce du chariot intègre la poignée en formant unité ave celle-ci, les deux éléments étant actionnés selon une même cinématique.

Le dispositif obtenu s'avère très simple et très pratique à utiliser, notamment du fait que la poignée est accessible à partir de la face avant du dossier, contrairement au cas de la solution décrite par le document EP-0 287 259.

En outre, le nombre de pièces est limité. La fabrication et le montage sont donc considérablement simplifiés.

De plus, le guidage des sangles est assuré de façon efficace grâce aux ouvertures maintenant la ou les sangles dans une position fixe prédéterminée en arrière du dossier, ce qui limite le risque de voir les sangles s'entremêler, ce qui nuirait évidemment au fonctionnement du dispositif de sécurité et éventuellement à l'efficacité de ce dernier.

Selon une solution préférée, ledit chariot est formé d'une pièce monobloc, intégrant notamment lesdits moyens de rappel.

Une fois encore, une telle disposition s'inscrit clairement dans l'objectif de simplicité de conception et de montage.

Préférentiellement, lesdits moyens de rappel comprennent au moins une languette élastiquement déformable, prenant appui contre ledit élément de dossier.

Avantageusement, ledit emplacement prédéterminé correspond à un des emplacements suivants :
- au dessus de l'espace défini par ladite glissière ;
- au dessous de l'espace défini par ladite glissière ;
- en position médiane de l'espace défini par ladite glissière.

Préférentiellement, la ou lesdites glissières coopèrent avec ledit chariot par un mécanisme de crémaillère ,définissant au moins deux hauteurs de réglage distinctes.

On obtient ainsi des moyens de coopération simples et efficaces entre le chariot et le dossier. Ces moyens contribuent à la simplicité de la conception d'ensemble et à la rapidité du montage dans la mesure où le nombre de pièces mises en oeuvre est très réduit.

Selon une solution avantageuse, ledit siège comprend des moyens de pivotement, permettant le passage de ladite position de repos à ladite position de réglage, et réciproquement, lesdits moyens de pivotement étant essentiellement formés par une zone de flexion ménagée sur ledit chariot.

De cette façon, on obtient un moyen de pivotement efficace, sans qu'il soit nécessaire de prévoir l'ajout et/ou le montage de pièces supplémentaires. De plus, grâce à la simplicité de la conception, le dispositif de réglage s'avère particulièrement pratique à utiliser.

Avantageusement, ladite zone de flexion forme un axe de pivotement sensiblement horizontal.

On obtient donc une poignée pouvant être actionnée sans contrainte latérale. En d'autres termes, la maniabilité de la poignée est inchangée que le siège soit monté à gauche ou à droite du véhicule ou que la personne actionnant la poignée soit droitière ou gauchère.

Selon une solution avantageuse, ladite zone de flexion s'étend à la base de ladite languette, ou au voisinage de cette base, ladite languette présentant une partie qui se rapproche progressivement dudit dossier pour venir en appui linéique et faire pivot sur ce dossier.

La languette ainsi constituée forme donc un moyen combinant la fonction de fournir un moyen de pivotement et la fonction de fournir un moyen de rappel de la poignée en position de repos.

Avantageusement, ledit chariot comprend une zone formant têtière, ladite poignée pouvant être intégrée à, ou définie par, ladite zone formant têtière.

Selon une solution particulière, ledit dossier peut présenter deux glissières, ledit chariot comprenant deux portions de guidage latérales entre lesquelles s'étendent lesdits moyens de rappel.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue de face d'un premier mode de réalisation de l'invention ;
- la figure 2 est une vue de devant, en perspective, d'un deuxième mode de réalisation de l'invention, le chariot de réglage de la position des sangles étant en position de repos ;
- la figure 3 est une vue du mode de réalisation de la figure 2, le chariot de réglage de la position des sangles étant en position de réglage ;
- la figure 4 est une vue de derrière du mode de réalisation de la figure 2, le chariot de réglage de la position des sangles étant en position de réglage ;
- la figure 5 est une vue d'un autre mode de réalisation d'un chariot de réglage de la position des sangles ;
- la figure 6 illustre le chariot de la figure 5, vu de derrière.

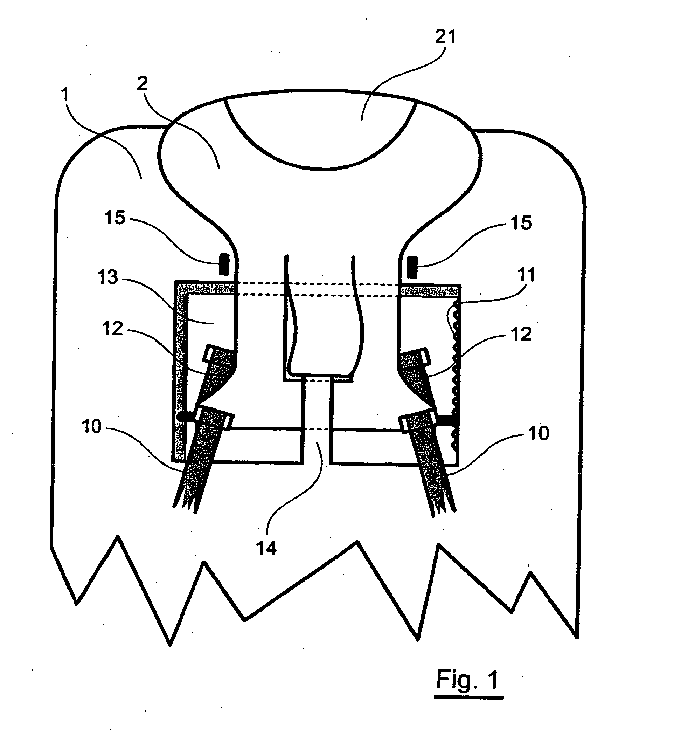

La figure 1 illustre le principe général de l'invention par la présentation d'un premier mode de réalisation de l'invention.

La description ci-après s'applique à un siège pourvu d'un harnais, c'est-à-dire comportant deux sangles s'étendant, en position de maintien de l'enfant, à partir du dossier au niveau des épaules de l'enfant jusqu'à l'assise où elles sont réunies et verrouillées sur une boucle (généralement unique).

Ces harnais équipent classiquement les sièges pour enfant destinés à être montés dans un véhicule.

On note toutefois que le principe de l'invention peut s'appliquer de façon similaire à un siège pour enfant équipée d'une seule sangle, du type des ceintures de sécurité ventrales.

Tel que cela apparaît sur la figure 1, le réglage en hauteur des sangles 10 est obtenu à l'aide d'un chariot 2 susceptible de coulisser en hauteur par rapport au dossier 1 du siège. Ce chariot est réalisé sous la forme d'un élément monobloc, intégrant notamment les moyens de coulissement, de guidage de sangles, de verrouillage et de libération. On obtient ainsi un ensemble très simple, peu coûteux à réaliser, facile à monter et à manipuler, et fiable et efficace.

Pour ce faire, le dossier 1 présente une glissière 13 réalisée sous forme d'une cavité fermée, dont les bords présentent chacun une crémaillère 11 destinée à coopérer avec le chariot 2 pour le blocage en position de celui-ci.

Selon une variante envisageable, les crémaillères latérales pourraient être remplacées par (ou combinée avec) une crémaillère centrale.

On note que des fenêtres de guidage 12 sont ménagées dans le fond de la glissière 13 pour former un passage des sangles au travers du dossier. On comprend qu'ainsi, vu de derrière le dossier, les sangles occupent une position fixe quelle que soit la position du chariot en avant du dossier.

Selon l'invention, le chariot présente ainsi une poignée 21 (qui peut être la partie haute du chariot), susceptible d'être actionnée de façon à basculer le chariot 2 vers l'intérieur du siège de façon que le chariot soit désengagé des crémaillères 11 et puisse coulisser, ceci à l'encontre de l'action de rappel exercée par une languette souple 22 prenant appui sur une traverse centrale 14 solidaire du dossier 1.

Par ailleurs, on assure le guidage en coulissement du chariot 2 à l'aide de moyens de guidage 15 solidaires du dossier 1.

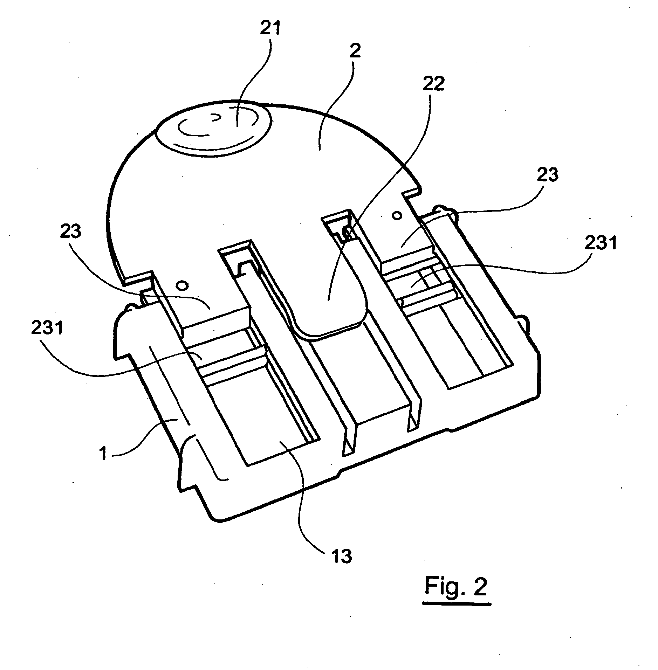

Le fonctionnement du chariot de réglage est explicité plus en détails en référence au deuxième mode de réalisation illustré par les figures 2 à 4.

Tel qu'illustré par la figure 2, le dossier d'un siège pour enfant selon l'invention présente un élément 1 par rapport auquel un chariot 2 peut être déplacé en vue de procéder au réglage en hauteur de la position d'au moins une sangle.

Comme cela va apparaître clairement par la suite, les éléments structurels de guidage du chariot sur le dossier sont ici dupliqués par rapport au premier mode de réalisation.

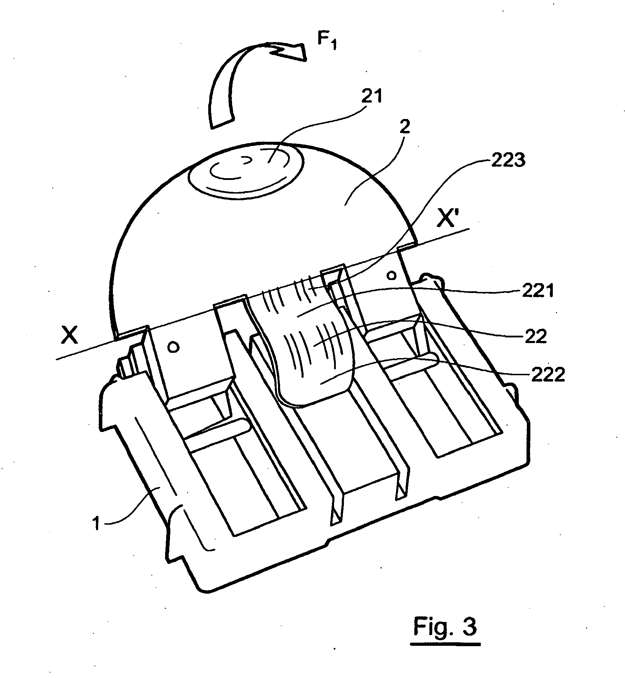

Selon ce mode de réalisation de l'invention, le chariot 2 présente, en sa partie supérieure, une poignée 21 pouvant prendre au moins deux positions :
- une position de repos illustrée par la figure 2, dans laquelle elle s'étend sensiblement parallèlement à l'élément de dossier 1, le chariot 2 étant alors immobilisé par rapport à l'élément de dossier 1 ;
- une position de réglage illustrée par la figure 3, dans laquelle la poignée 21 est déplacée (tel qu'indiqué par la flèche F1) vers l'intérieur du siège, le chariot 2 pouvant alors être déplacé par rapport à l'élément de dossier 1, ceci en vue de faire varier la position en hauteur des sangles.

En outre, des moyens de rappel 22 sont prévus, ceux-ci tendant à ramener la poignée 21 dans la position de repos.

Tel que cela apparaît clairement sur les figures 2 et 3, les moyens de réglage comprennent une pièce monobloc, formée par exemple par moulage d'un matériau plastique, selon laquelle le chariot 2 forme un seul tenant avec la poignée 21 et les moyens de rappel 22.

A titre indicatif, la poignée 21 est ici constituée par un renflement bombé dont le côté convexe apparaît du côté de la face avant du dossier.

Selon le présent mode de réalisation, les moyens de rappel sont constitués par une languette élastiquement déformable prenant appui à son extrémité libre sur l'élément de dossier 1.

De plus, le rappel élastique de cette languette est obtenu en donnant à celle-ci une courbure selon laquelle la languette s'écarte du dossier (sur une portion 221), à partir de son extrémité liée au corps du chariot, puis s'en rapproche progressivement (sur une portion 222) de façon que l'extrémité libre de la languette vienne en appui sur l'élément de dossier 1.

Par ailleurs, la base de la languette forme une zone de flexion 223 s'étendant selon un axe sensiblement horizontal xx', cette zone formant un moyen de pivotement en vue du passage de la position de repos à la position de réglage, et inversement.

Le guidage des deux sangles du harnais est ici assuré par deux portions de guidage 23 du chariot 2 sous forme de colonnes latérales présentant chacune une lumière 231 pour le passage d'une sangle (non représentée) et entre lesquelles s'étend la languette de rappel 22.

Selon une autre caractéristique, le chariot 2 porte des moyens de coopération destinés à interagir avec des moyens de blocage complémentaires solidaires de l'élément de dossier 1, en vue d'assurer le verrouillage du chariot en position de repos.

En référence à la figure 3, ces moyens de coopération permettant le verrouillage du chariot sont constitués par des éléments 232 faisant saillie latéralement à la base des colonnes latérales 23.

Ces éléments 232 sont destinés à coopérer avec une crémaillère 11 portée par l'élément de dossier, chacune des dents de la crémaillère définissant une position de réglage en hauteur du chariot.

On note que des crémaillères peuvent être positionnées selon plusieurs variantes envisageables, notamment en associant au moins une crémaillère à chacune des colonnes du chariot ou à une seule d'entre elles, en prévoyant une crémaillère de chaque côté d'une colonne (ou de chaque colonne) ou d'un seul côté d'une colonne (ou de chaque colonne)...

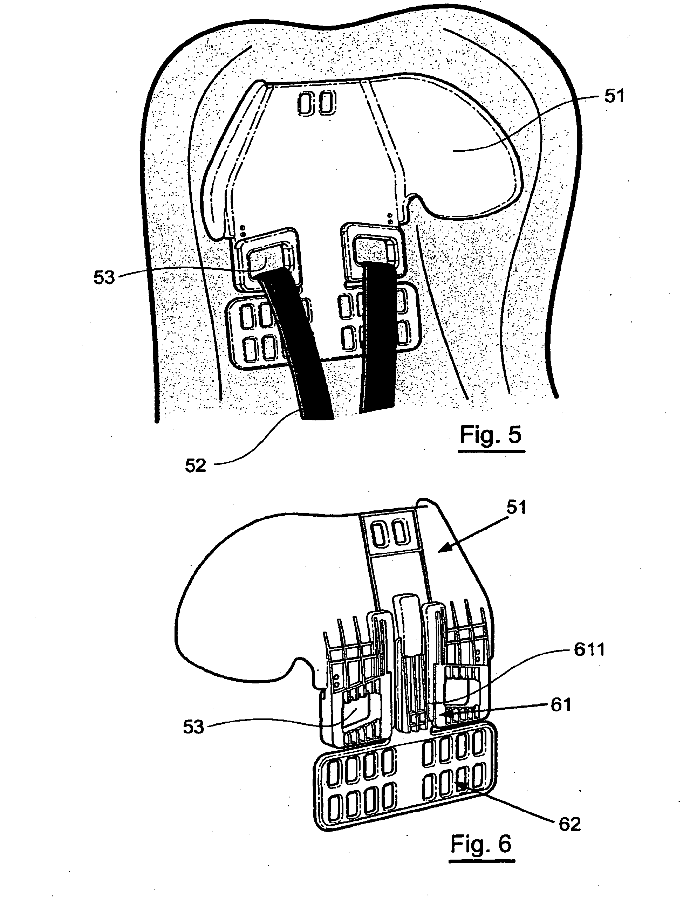

La figure 5 présente un autre mode de réalisation de l'invention, dans lequel le chariot a été modifié, de façon à intégrer, dans sa partie supérieure, une têtière 51.

Outre les avantages de simplification de fabrication et de montage, cela permet un réglage simultané de la hauteur de la têtière et des sangles, sans pièce supplémentaire.

La poignée peut alors être formée directement par cette têtière. On note que la partie supérieure correspondant à la têtière forme un angle avec la partie coulissante, ce qui facilite la préhension. Cette portion haute peut en outre intégrer ou recevoir des moyens de préhension.

Ainsi, en pratique, le chariot peut être pourvu de prolongements latéraux formant moyens d'appui pour la tête d'un enfant. Un matériau de matelassage et un tissu classiques recouvrent le chariot de façon homogène avec les autres parties du siège.

La figure 6 présente le chariot (ensemble monobloc) de la figure 5, vu de derrière. La languette 61 a également une forme différente de celle décrite précédemment, tout en assurant la même fonction. La forme de cette languette est telle qu'elle se rapproche progressivement du dossier pour venir en appui sur l'élément de dossier 1. Ainsi, elle présente une partie qui se rapproche progressivement dudit dossier pour venir en appui linéique et faire pivot sur ce dossier.

Avantageusement, la languette 61 présente une série de nervures 611 venant en contact avec le dossier.

En partie inférieure, le chariot se termine par une plaque 62, venant fermer l'ouverture (ou les ouvertures) formée dans le dossier, les sangles 52 (figure 5) circulant dans les passages 53.

Le réglage en hauteur du chariot s'effectue de la manière suivante.

A partir d'une position de repos telle que celle illustré par la figure 2, on tire la poignée 21 vers l'avant (selon la flèche F1) ce qui produit les effets suivants :
- le chariot se courbe légèrement autour de la zone de flexion 223 ;
- la languette 22 s'arc-boute en appui sur l'élément de dossier 1 ;
- les éléments 232 s'écartent et se désengagent des crémaillères 11 correspondantes.

Le chariot 2 peut alors être coulissé verticalement le long de l'élément de dossier 1.

En relâchant la poignée 21, la languette 22 exerce un effort de rappel élastique et ramène le chariot en position de repos, les éléments 232 s'engageant alors dans les crémaillères 11 correspondantes et bloquant le déplacement du chariot par rapport à l'élément de dossier.

On comprend que le mode de réalisation illustré par la figure 1 présente un fonctionnement similaire à celui qui vient d'être décrit.

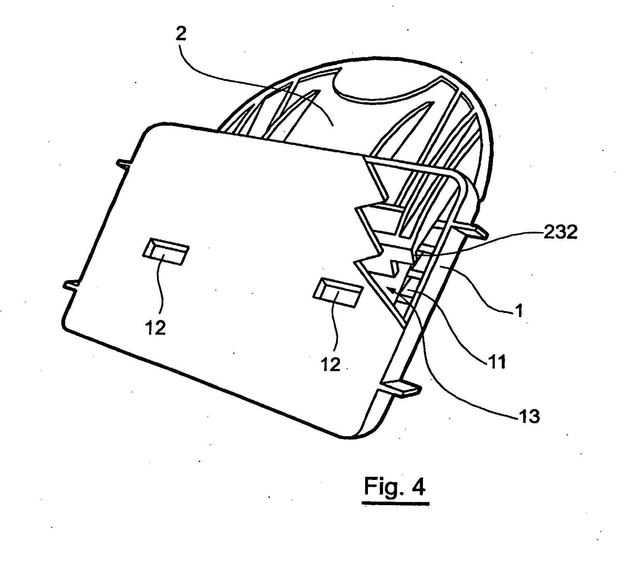

Selon encore une autre caractéristique du présent mode de réalisation illustrée par la figure 4, l'élément de dossier 1 présente, pour chacune des sangles, une fenêtre de guidage 12.

Selon le présent mode de réalisation, ces fenêtres de guidage 12 s'étendent en position médiane de l'espace défini par chacune des glissières 13 de l'élément de dossier 1.

On note que, selon des variantes envisageables, ces fenêtres de guidage pourraient aussi être prévues au dessus ou en dessous des glissières.

Ainsi, les lumières 231 de passage des sangles et les fenêtres de guidage 12 définissent ensemble une chicane de circulation des sangles.

Le guidage et le maintien en tension des sangles est ainsi correctement assuré, et leur position reste sensiblement invariante vue de l'arrière du siège. En d'autres termes, à l'arrière du siège, les sangles occupent une position prédéterminée, ceci essentiellement dans un espace délimité qui est celui des cavités 13 de l'élément de dossier 1.

## Revendications

1. Siège pour enfant, comprenant au moins une sangle de maintien de l'enfant montée sur un chariot (2) mobile par rapport au dossier (1) dudit siège, sur la face dudit dossier (1) tournée vers l'intérieur dudit siège,
**caractérisé en ce que** ledit dossier (1) présente au moins une glissière de guidage essentiellement pleine, dans laquelle coulisse une portion de guidage dudit chariot (2), portant au moins une desdites sangles,
la ou lesdites glissières présentant une ouverture (231) adaptée au passage d'une desdites sangles en un emplacement prédéterminé, de façon que chacune de la ou desdites sangles correspondantes traverse ledit dossier (1) en une position fixe, quelle que soit la position dudit chariot (2),
et **en ce que** ledit chariot (2) présente, en sa partie supérieure, une poignée (21) pouvant prendre au moins deux positions :
- une position verrouillée, dite position de repos, dans laquelle ledit chariot (2) s'étend sensiblement parallèlement audit dossier (1), ledit chariot (2) étant alors solidarisé audit dossier (1) ;
- une position de réglage, dans laquelle ladite poignée (21) entraîne ledit chariot (2) en basculement vers l'intérieur dudit siège, la position dudit chariot (2) pouvant alors être réglée en hauteur par rapport audit dossier (1),
des moyens de rappel (22) tendant à ramener ladite poignée (21) dans ladite position verrouillée.

2. Siège pour enfant selon la revendication 1, **caractérisé en ce que** ledit chariot (2) est formé d'une pièce monobloc, intégrant notamment lesdits moyens de rappel (22).

3. Siège pour enfant selon l'une quelconque des revendications 1 et 2, **caractérisé en ce que** lesdits moyens de rappel (22) comprennent au moins une languette élastiquement déformable, prenant appui contre ledit dossier (1).

4. Siège pour enfant selon l'une quelconque des revendications 1 à 3, **caractérisé en ce que** ledit emplacement prédéterminé correspond à un des emplacements suivants :
- au dessus de l'espace défini par ladite glissière ;
- au dessous de l'espace défini par ladite glissière ;
- en position médiane de l'espace défini par ladite glissière.

5. Siège pour enfant selon l'une quelconque des revendications 1 à 4, **caractérisé en ce que** la ou lesdites glissières coopèrent avec ledit chariot (2) par un mécanisme de crémaillère (11), définissant au moins deux hauteurs de réglage distinctes.

6. Siège pour enfant selon l'une quelconque des revendications 1 à 5, **caractérisé en ce qu**'il comprend des moyens de pivotement, permettant le passage de ladite position de repos à ladite position de réglage, et réciproquement, lesdits moyens de pivotement étant essentiellement formés par une zone de flexion (223) ménagée sur ledit chariot (2).

7. Siège pour enfant selon la revendication 6, **caractérisé en ce que** ladite zone de flexion (223) forme un axe de pivotement sensiblement horizontal.

8. Siège pour enfant selon l'une quelconque des revendications 5 à 7, **caractérisé en ce que** ladite zone de flexion (223) s'étend à la base de ladite languette, ou au voisinage de cette base, ladite languette présentant une forme qui se rapproche progressivement dudit dossier et vient en contact avec lui, puis s'en écarte de façon à créer une zone d'appui et de pivot avec ledit dossier.

9. Siège pour enfant selon l'une quelconque des revendications 1 à 8, **caractérisé en ce que** ledit chariot comprend une zone formant têtière.

10. Siège pour enfant selon l'une quelconque des revendications 1 à 9, **caractérisé en ce que** ladite poignée (21) est intégrée à ladite zone formant tétière.

11. Siège pour enfant selon l'une quelconque des revendications 1 à 10, **caractérisé en ce que** ledit dossier présente deux glissières, ledit chariot comprenant deux portions de guidage latérales (23) entre lesquelles s'étendent lesdits moyens de rappel (22).

## Claims

1. Child seat, comprising at least one strap for holding the child mounted on a carriage (2) movable with respect to the back (1) of said seat, on the face of said back (1) turned towards the inside of said seat,
**characterised in that** said back (1) has at least one essentially unbroken guide channel, in which there slides a guidance portion of said carriage (2), carrying at least one of said straps,
said channel or channels having an opening (231) adapted for the passage of one of said straps at a predetermined location, so that said or each of said corresponding straps passes through said back (1) at a fixed position, irrespective of the position of said carriage (2),
and **in that** said carriage (2) has, in its upper part, a handle (21) capable of taking at least two positions:
- a locked position, referred to as the rest position, in which said carriage (2) extends substantially parallel to said back (1), said carriage (2) then being fixed to said back (1);
- an adjustment position, in which said handle (21) drives said carriage (2) tilting towards the inside of said seat, the position of said carriage (2) then being able to be adjusted height-wise with respect to said back (1),
return means (22) tending to bring back said handle (21) to said locked position.

2. Child seat according to Claim 1, **characterised in that** said carriage (2) is formed of a single-piece component, incorporating in particular said return means (22).

3. Child seat according to either one of Claims 1 and 2, **characterised in that** said return means (22) comprise at least one elastically deformable tongue, resting against said back (1).

4. Child seat according to any one of Claims 1 to 3, **characterised in that** said predetermined location corresponds to one of the following locations:
- above the space defined by said channel;
- below the space defined by said channel;
- in a middle position of the space defined by said channel.

5. Child seat according to any one of Claims 1 to 4, **characterised in that** said channel or channels cooperate with said carriage (2) by means of a rack mechanism (11), defining at least two distinct adjustment heights.

6. Child seat according to any one of Claims 1 to 5, **characterised in that** it comprises pivoting means, enabling the change from said rest position to said adjustment position, and vice versa, said pivoting means being essentially formed by a bending area (223) arranged on said carriage (2).

7. Child seat according to Claim 6, **characterised in that** said bending area (223) forms a substantially horizontal pivoting axis.

8. Child seat according to any one of Claims 5 to 7, **characterised in that** said bending area (223) extends at the base of said tongue, or in the vicinity of this base, said tongue having a shape which progressively gets closer to said back and comes into contact therewith, then gets further away therefrom so as to create an area of abutment and pivot with said back.

9. Child seat according to any one of Claims 1 to 8, **characterised in that** said carriage comprises an area forming a headrest.

10. Child seat according to any one of Claims 1 to 9, **characterised in that** said handle (21) is incorporated in said area forming a headrest.

11. Child seat according to any one of Claims 1 to 10, **characterised in that** said back has two channels, said carriage comprising two lateral guidance portions (23) between which said return means (22) extend.

## Patentansprüche

1. Kindersitz, der mindestens einen auf einem gegenüber der Rücklehne (1) des besagten Sitzes beweglichen Wagen (2) angebrachten Haltegurt für das Kind auf der zum Inneren des besagten Kindersitzes gewandten Fläche dieser Rücklehne (1) aufweist,
**dadurch gekennzeichnet, dass** die besagte Rücklehne (1) mindestens eine im Wesentlichen massive gleitende Führungsschiene aufweist, in der ein Teil der Führung des besagten Wagens (2) gleitet, welcher mindestens einen Teil der besagten Haltegurte trägt,
wobei die Gleitschiene(n) eine Öffnung (231) aufweist bzw. aufweisen, die den Durchgang einer der erwähnten Haltegurte an einer vorgegebenen Stelle erlaubt, so dass der entsprechende Haltegurt bzw. jeder der entsprechenden Haltegurte an einer feststehenden Position durch die Rücklehne (1) läuft, unabhängig von der Position des besagten Wagens (2), und
**dadurch**, dass der besagte Wagen (2) am oberen Teil einen Griff (21) aufweist, der mindestens zwei Positionen einnehmen kann:
- eine verriegelte Position, besagte Ruheposition, in der sich der besagte Wagen (2) in etwa parallel zur erwähnten Rücklehne (1) erstreckt, wobei der Wagen (2) dann mit der Rücklehne (1) verbunden ist;
- eine Einstellposition, in welcher der besagte Griff (21) den besagten Wagen (2) mitnimmt, indem er ihn zum Inneren des Sitzes hin kippt, wobei die Position des Wagens (2) sich dann in der Höhe im Verhältnis zur Rücklehne (1) einstellen lässt,
wobei Rückholmittel (22) die Tendenz zum Rückholen des besagten Griffs (21) in die verriegelte Position aufweisen.

2. Kindersitz nach Anspruch 1, **dadurch gekennzeichnet, dass** der besagte Wagen (2) aus einem einzigen Teil besteht, der insbesondere die besagten Rückholmittel (22) umfasst.

3. Kindersitz nach einem der Ansprüche 1 oder 2, **dadurch gekennzeichnet, dass** die besagten Rückholmittel (22) mindestens eine elastisch verformbare Lasche aufweisen, welche sich gegen die besagte Rücklehne (1) stützt.

4. Kindersitz nach einem der Ansprüche 1 bis 3, **dadurch gekennzeichnet, dass** die besagte vorgegebene Stelle sich an einer der folgenden Stellen befindet:
- oberhalb des von der besagten Gleitschiene bestimmten Raumes;
- unterhalb des von der besagten Gleitschiene bestimmten Raums;
- in einer Mittelposition des von der besagten Gleitschiene bestimmten Raums.

5. Kindersitz nach einem der Ansprüche 1 bis 4, **dadurch gekennzeichnet, dass** die besagte(n) Gleitschiene(n) mit dem besagten Wagen (2) über einen Zahnstangemechanismus (11) zusammenwirkt bzw. zusammenwirken, der mindestens zwei verschiedene Einstellhöhen bestimmt.

6. Kindersitz nach einem der Ansprüche 1 bis 5, **dadurch gekennzeichnet, dass** er Mittel zum Drehen aufweist, die den Übergang von der besagten Ruheposition in die besagte Einstellposition und umgekehrt ermöglicht, wobei die besagten Mittel zum Drehen im Wesentlichen durch einen am besagten Wagen (2) angebrachten biegsamen Bereich (223) gebildet wird.

7. Kindersitz nach Anspruch 6, **dadurch gekennzeichnet, dass** der besagte biegsame Bereich (223) eine in etwa horizontale Drehachse bildet.

8. Kindersitz nach einem der Ansprüche 5 bis 7, **dadurch gekennzeichnet, dass** der besagte biegsame Bereich (223) sich am Fußbereich der besagten Lasche oder in der Nähe dieses Fußbereichs erstreckt, wobei die Lasche eine Form aufweist, die sich allmählich der Rücklehne nähert und sich endlich an diese legt, wonach sie sich davon wieder entfernt, um einen Anlehnungs- und einen Drehungsbereich zusammen mit der besagten Rücklehne zu bilden.

9. Kindersitz nach einem der Ansprüche 1 bis 8, **dadurch gekennzeichnet, dass** der besagte Wagen einen Bereich aufweist, der ein Kopfteil bildet.

10. Kindersitz nach einem der Ansprüche 1 bis 9, **dadurch gekennzeichnet, dass** der besagte Griff (21) in den besagten, einen Kopfteil bildenden Bereich, eingebaut ist.

11. Kindersitz nach einem der Ansprüche 1 bis 10, **dadurch gekennzeichnet, dass** die besagte Rücklehne zwei Gleitschienen aufweist, wobei der besagte Wagen zwei seitliche Führungsbereiche (23) aufweist, zwischen denen sich die besagten Rückholmittel (22) befinden.
